# EUROPÄISCHE PATENTSCHRIFT

(11) **EP 4 429 953 B1**
(45) Veröffentlichungstag und Bekanntmachung des Hinweises auf die Patenterteilung: **28.01.2026**
(21) Anmeldenummer: 23718635.8
(22) Anmeldetag: 05.04.2023
(51) Int. Cl.: B64D 15/04

(54) **ENTEISEN EINES FLUGZEUGS MIT HILFE EINES REFORMERS ZUR WASSERSTOFF-ERZEUGUNG**
DE-ICING OF AN AIRCRAFT BY MEANS OF A REFORMER FOR HYDROGEN GENERATION
DÉGIVRAGE D'UN AÉRONEF AU MOYEN D'UN REFORMEUR POUR LA GÉNÉRATION D'HYDROGÈNE

(30) Priorität: 13.04.2022 DE 102022109144
(43) Veröffentlichungstag der Anmeldung: 18.09.2024
(73) Patentinhaber: Diehl Aerospace GmbH, 88662 Überlingen (DE)
(72) Erfinder: TICHY, Franz, 64859 Eppertshausen (DE); RAMOLLA, Christian, 60437 Frankfurt (DE); KNEPPLE, Ronny, 88662 Überlingen (DE)
(74) Vertreter: Diehl Patentabteilung
(86) Internationale Anmeldenummer: PCT/EP2023/058938
(87) Internationale Veröffentlichungsnummer: WO 2023/198547

(56) Entgegenhaltungen:
- WO-A1-2013/140306
- DE-A1- 102004 058 430
- DE-A1- 102012 002 132
- DE-B3- 102007 060 428
- FR-A1- 2 996 064
- US-A1- 2007 172 707
- US-B2- 7 659 015

## Beschreibung

Die Erfindung betrifft das Enteisen bzw. die Enteisung von Komponenten eines Flugzeuges.

Aus der DE 10 2004 058 430 B4 ist ein Versorgungssystem zur Energieversorgung in einem Luftfahrzeug bekannt, welches umfasst: mindestens ein Triebwerk zum Antreiben des Luftfahrzeuges, eine Brennstoffzelle zum Versorgen des Luftfahrzeuges mit einer elektrischen Energie und eine Flügelenteisungs-Einrichtung, die derart mit der Brennstoffzelle gekoppelt ist, dass sich mittels eines beim Betrieb der Brennstoffzelle anfallenden Wasserdampfes ein Flügel des Luftfahrzeuges mittels der Flügelenteisungs-Einrichtung enteisen lässt, wobei der Wasserdampf, der Brennstoffprodukt der Brennstoffzelle ist, vor dem Flügelenteisen zum Gewinnen von Wasser auskondensiert wird, als verbleibendes Brennstoffprodukt mittels einer Wärmepumpe erwärmt und danach der Flügelenteisungs-Einrichtung zugeführt wird.

Aus der WO 2006/058774 A2 ist ein Versorgungssystem zur Energieversorgung in einem Flugzeug bekannt, enthaltend eine Maschine zum Antreiben des Flugzeuges, eine Brennstoffzelle zur Versorgung des Flugzeuges mit elektrischer Energie, einem ersten Kraftstofftank zur Versorgung der Maschine mit Maschinenkraftstoff und einem zweiten Kraftstofftank zur Versorgung der Brennstoffzelle mit Brennstoffzellen-Kraftstoff. Der erste Kraftstofftank ist getrennt von dem zweiten Kraftstofftank angeordnet.

Aus der EP 2 268 545 B1 ist ein Enteisungssystem für ein Flugzeug bekannt. Dieses enthält mindestens eine Wärmequelle, mindestens ein Luftausleitungsmittel zum Ausleiten von Luft in zu enteisende Bereiche des Flugzeuges und mindestens eine Lufterwärmungseinrichtung. Das Luftausleitungsmittel ist direkt über die Lufterwärmungseinrichtung mit einem Leitungssystem verbunden, das Abluft aus einer Kabine des Flugzeuges bezieht, wobei die Lufterwärmungseinrichtung zum Erwärmen der Abluft aus der Kabine des Flugzeuges Wärme der mindestens einen Wärmequelle aufnimmt.

Aus der WO 2013/1 40306 A1 ist ein Flügelvereisungsschutzsystem bekannt, welches ein Brennstoffzellensystem, einen Wärmetauscher und einen Fluidkreislauf enthält, und welches eine Auswahl aus Elektrizität und weiteren Nebenprodukten wie Wasser, Wärme und sauerstoffabgereicherte Luft, erzeugt durch das genannte Brennstoffzellensystem, benutzt für den besagten Flügelvereisungsschutz und weitere lokale periphere Anwendungen an einem Flugzeug.

Auch aus der US 2007/0 172 707 A1 ist ein Versorgungssystem für ein Flugzeug bekannt, das eine Brennstoffzelle umfasst. Die Abwärme der Brennstoffzelle kann für ein Enteisungssystem genutzt werden, mit dessen Hilfe Flügelkanten des Flugzeuges beheizt werden, so dass deren Vereisung verhindert wird.

Aus der FR 2 996 064 A1 ist eine Anlage bekannt mit einem Wärme abgebenden Leistungsmodul, wobei das Leistungsmodul mindestens eine Brennstoffzelle mit einer Anode und einer Kathode und mindestens einen Reformer umfasst, wobei die Anode durch den Reformer mit Wasserstoff versorgt wird und die Kathode mit Sauerstoff versorgt wird. Die Anlage umfasst einen Zirkulationskreislauf einer Verbrauchsflüssigkeit, wobei dieser Zirkulationskreislauf mindestens einen Wärmetauscher umfasst, der einen Heizkreislauf umfasst, der thermisch mit dem Leistungsmodul gekoppelt ist, und einen beheizten Kreislauf umfasst, der mit dem Zirkulationskreislauf gekoppelt ist, wobei der Heizkreislauf mit dem beheizten Kreislauf Wärme austauscht und so die Verbrauchsflüssigkeit erwärmt.

Aufgabe der vorliegenden Erfindung ist es, Verbesserungen in Bezug auf das Enteisen von Komponenten eines Flugzeuges vorzuschlagen.

Die Aufgabe wird gelöst durch ein Verfahren gemäß Patentanspruch 1. Das Verfahren dient bzw. ist eingerichtet zum Enteisen wenigstens einer Komponente eines Flugzeuges. Komponenten sind insbesondere Ruder, Klappen, Einlässe von Turbinen, Flügelvorderkanten usw. Das Verfahren geht dabei von folgendem bestimmungsgemäßen Flugzeug aus bzw. setzt dieses voraus: "Bestimmungsgemäß" heißt, dass das Verfahren auf ein bestimmtes oder einen bestimmten Typ von Flugzeug, abgestimmt ist und für den Einsatz dort eingerichtet ist; z.B. für die dadurch bestimmten Geometrie- / thermischen Anforderungen usw. ausgelegt ist. Mit anderen Worten wird ein betreffendes Flugzeug als bekannt hinsichtlich solcher Eigenschaften usw. vorausgesetzt.

Das Flugzeug enthält einen Reformer. Im Betrieb erzeugt der Reformer in einem Reformierungsprozess ein Reformat, das Wasserstoff enthält. Der Reformer wird daher auch Wasserstofferzeugungssystem genannt. Im Rahmen dieses Reformierungsprozesses erzeugt der Reformer auch entstehende Abwärme. Ein Teil dieser Abwärme ist auch in dem erzeugten Reformat bzw. in dem erzeugten Wasserstoff enthalten. Das Flugzeug enthält auch eine Brennstoffzelle. Diese ist im Betrieb mit dem vom Reformer erzeugten Wasserstoff betrieben bzw. wird mit diesem betrieben. Bei dem Verfahren wird wenigstens im Bedarfsfall einer Enteisung der Komponente die Abwärme des Reformers vermittels eines Wärmekanals zur Komponente transportiert. "Die Abwärme" bezieht sich vorliegend auf zumindest einen Teil einer Gesamtabwärme des Reformers. Angesprochen ist dabei stets nur der Teil der Gesamtabwärme, der tatsächlich dem Wärmekanal zugeführt und den Komponenten zugeleitet wird. Weiterhin sollen hier Wärmeverluste in Bezug auf den Transport usw. der Abwärme nicht betrachtet werden.

Der Transport geschieht, um die Komponente mit der Abwärme zu erwärmen und dadurch insbesondere zu enteisen. Ein Nebeneffekt ist die Abführung der Abwärme an die Umgebung des Flugzeuges und damit ein Ableiten der Abwärme aus dem Flugzeug. Der Wärmekanal kann Verzweigungen zu weiteren zu enteisenden Komponenten oder auch zu Wärmesenken, wie sie unten beschrieben werden, aufweisen. Auch kann der Kanal von mehreren Reformern mit Abwärme gespeist werden. Es können auch mehrere Kanäle vorhanden sein, die von der selben oder unterschiedlichen Reformern mit Abwärme gespeist werden. Sowohl die Einleitung der Abwärme (bzw. von deren Anteilen, siehe unten), also auch die Ausleitung zur Komponente (oder der Wärmesenke, siehe unten) hin kann an beliebiger Stelle des Wärmekanals erfolgen.

Als wärmetragende / -transportierende Medien im Wärmekanal sind insbesondere Gase oder flüssige Medien denkbar, welche zumindest auf einem Teil der Übertragungsstrecke die Abwärme von dem Reformer Komponente und/oder zur Wärmesenke (siehe unten) transportieren. Mit anderen Worten ist zumindest ein Abschnitt des Wärmekanals dann gasführender oder flüssigkeitsführender Kanal / Rohrleitung ausgebildet. Insbesondere können die wärmetragenden / -transportierenden Medien zirkuliert werden. Dies gilt insbesondere für flüssige Medien. Dies führt zu einer Einsparung bezüglich Verbrauch des betreffenden Mediums.

Das "Enteisen" ist hier als tatsächliches Enteisen, also die Entfernung von bereits an oder im Umfeld der Komponente vorhandenem Eis zu verstehen. Es ist jedoch auch so zu verstehen, dass durch Erwärmung bereits vorsorglich eine Eisbildung an der Komponente verhindert werden soll; die "Enteisung" ist hier also ggf. auch im Sinne einer Eisverhütung zu verstehen. Im Folgenden wird der Einfachheit halber stets von "Enteisen" gesprochen, wobei auch vorsorgliche Erwärmung, d.h. Eisverhütung, angesprochen sein kann.

Solange nicht explizit erwähnt, beziehen sich die vorliegenden Erläuterungen insbesondere auf den laufenden Betrieb des Reformers und der Brennstoffzelle, d.h. statische bzw. gleichmäßige übliche Betriebsverhältnisse. Hochdynamische Verhältnisse bzw. Sonderbetriebsarten, wie zum Beispiel eine Änderung der Betriebsart der Brennstoffzelle oder des Reformers (Einschalten, Ausschalten, Spülen, ...) sollen hier nicht betrachtet werden. Der Reformer erzeugt den Wasserstoff insbesondere in Form eines bzw. als Teil eines Reformats, welches neben Wasserstoff noch weitere Produkte beinhaltet. Insbesondere erzeugt der Reformer das Reformat bzw. den Wasserstoff aus einem Propylenglykol-Wassergemisch ("PGW').

Gemäß der Erfindung muss die Wärme, die im Enteisungssystem bzw. einer Enteisungsvorrichtung bzw. dem Flugzeug zur Enteisung von Komponenten benötigt wird, nicht vom Triebwerk in Form von Zapfluft oder elektrischer Leistung aus z.B. Kerosin erzeugt werden, sondern die Abwärme eines Reformers einer bzw. für eine Brennstoffzelle kann genutzt werden.

Ein weiterer Vorteil der Erfindung ist darin zu sehen, dass für die Entsorgung der Abwärme des Wasserstofferzeugungssystems kein zusätzliches Teilsystem vorzusehen ist, sondern die Enteisungsvorrichtung (siehe unten, Wärmekanal, Komponente, Wärmesenke, ...) verwendet wird.

Die Erfindung beruht auf der Idee, dass in Flugzeugen zunehmend Brennstoffzellen eingesetzt werden. Zum Beispiel könnte elektrische Energie für eine Passagierkabine / Bordküche, alternativ zu den Generatoren an den Schubtriebwerken, innerhalb der Bordküche (Gallery) erzeugt. Derartige energieerzeugende Systeme könnten ein Brennstoffzellensystem, also eine oder mehrere Brennstoffzellen und ein oder mehrere Reformer bzw. Wasserstofferzeugungssysteme aufweisen. Ausgangs-Brennstoff bzw. Treibstoff hierfür ist beispielsweise ein Propylenglykol-Wassergemisch (PGW). Dies ist ein flüssiger, sehr sicherer, ungiftiger Brennstoff, der in großen Mengen regenerativ erzeugt werden kann. Aus dem PGW wird mittels Reformer (auch "Wasserstofferzeugungssystem", "Fuelprozessorsystem", "Komplettreformer") der Wasserstoff für das Brennstoffzellensystem hergestellt. Das Wasserstofferzeugungssystem liefert ein Gasgemisch, Reformat genannt, dessen Hauptbestandteil Wasserstoff ist. Weitere Anteile des Gasgemisches sind Stickstoff, Kohlendioxid und Wasserdampf. Aufgrund des Wirkungsgrades des Brennstoffzellensystems von ca. 50 % und des Wasserstofferzeugungssystems von 85% bis 95 % fällt der größere Teil der Energie als Wärme / (Gesamt-)Abwärme an, ca. 53% bis 57%. Von dieser Abwärme kann nur ein kleiner Teil in der Kabine, zum Beispiel in der Bordküche, genutzt werden, da das Temperaturniveau der Abwärme der Brennstoffzelle (ca. 60 °C) zu gering ist, um Mahlzeiten zu erwärmen oder Heißgetränke zuzubereiten.

Die Erfindung beruht auf der Idee der Steigerung des Wirkungsgrades bezüglich der im Gesamtsystem "Flugzeug" verbrauchten Treibstoffe (zum Beispiel Kerosin) bzw. Brennstoffe (zum Beispiel PGW). Gemäß der Erfindung ergibt sich eine bessere Nutzung der Wärme / der Energie die im Brennstoff (PGW) vorhanden ist. Es wird deshalb in der vorliegenden Erfindung vorgeschlagen, die Abwärme des Wasserstofferzeugungssystems der Enteisungsvorrichtung zuzuführen und zu nutzen. Diese Nutzung von Abwärme reduziert den Treibstoffverbrauch der Triebwerke, da zum Beispiel weniger oder keine Zapfluft dafür aufgewendet werden muss. Die Idee der Erfindung ist es, insbesondere, die vorhandene Enteisungseinrichtung (auch "Enteisungssystem") bzw. dessen Infrastruktur, insbesondere einen bereits bestehenden Wärmekanal, zu nutzen (also ohne Zusatzkomponenten), um die Abwärme des Reformers zu entsorgen und gleichzeitig Treibstoff zu sparen.

Gemäß des Verfahrens wird zumindest ein erster Teil der Abwärme vom Reformer in Form von erwärmtem Abgas des Reformierungsprozesses erzeugt. Das Abgas entsteht bei der Erzeugung des Reformats aus dem Brennstoff (insb. PGW) als Nebenprodukt neben dem Reformat. Das Abgas wird durch den Wärmekanal zu der Komponente geführt, um diese zu erwärmen und damit zu enteisen. Ein derartiger Gasstrom von Abgas weist insbesondere eine Temperatur von 100 bis 150 °C auf. Das Abgas wird insbesondere vom Reformer direkt in den Wärmekanal geleitet und durch den Wärmekanal hindurch zur Komponente geleitet. Insbesondere wird auch die Komponente direkt bzw. unmittelbar vom Abgas angeströmt, d.h. ohne Zwischenschaltung weiterer Wärmetauscher usw. Das Abgas entweicht dann bei oder nach Erwärmung der Komponente in die Umgebung des Flugzeuges.

Hintergrund dieser Ausführungsform ist: Der Reformer liefert außer dem gewünschten Produkt, nämlich dem wasserstoffhaltigen Reformat, auch das Abfallprodukt Wärme in Form eines heißen Abgas- bzw. Gasstroms, welches das Abgas des Reformierungsprozesses ist. Die Temperatur des Abgases liegt typischerweise zwischen 100 und 150 °C. Falls diese Temperatur zu hoch sein sollte für z.B. einen Wärmekanal z.B. eines existierenden Enteisungssystems (der hier nach Umrüstung genutzt wird, siehe unten), kann das Abgas mit Luft als Zweitgas gemischt werden und damit als Mischgas in einen niedrigeren Temperaturbereich gebracht werden. Die Bestandteile des Abgases sind insbesondere Stickstoff, Kohlendioxid, Sauerstoff und Wasserdampf. Das Abgas enthält insbesondere keine giftigen Stoffe wie zum Beispiel Kohlenmonoxid oder Stickoxide, wie man sie von Verbrennungsvorgängen kennt. Der heiße Abgasstrom kann dem Wärmekanal bzw. dem restlichen Enteisungssystem zugeführt werden, wie es auch mit Zapfluft geschehen könnte bzw. in aus der Praxis bekannten Systemen geschieht. Das Abgas verlässt das Flugzeug dann insbesondere wie es auch bisher mit der Zapfluft der Fall war. Damit ließe sich die Erfindung auch in existierenden Flugzeugen durch Nachrüstung leicht anwenden, siehe unten.

Ein weiterer Aspekt der Erfindung besteht also darin, für die Entsorgung des Abgases des Reformers aus dem Flugzeug kein zusätzliches Teilsystem vorzusehen, sondern die vorhandenen Rohrleitungen und Auslässe des Enteisungssystems (hier den Wärmekanal) zu verwenden.

In einer bevorzugten Variante dieser Ausführungsform wird wie oben schon angedeutet dem Abgas nach dessen Erzeugung im Reformer ein Zweitgas beigemischt, um ein Mischgas zu erhalten. Das Abgas wird dann im Mischgas durch den Wärmekanal zu der Komponente geführt, um diese zu erwärmen. Hierbei wird insbesondere ein der Komponenten zugewandter bzw. an dieser endender endseitiger Abschnitt des Wärmekanals genutzt, je nachdem an welchem Punkt des Wärmekanals die Beimischung des Zweitgases zum Abgas erfolgt. Insbesondere wird ein im Vergleich zum Abgas kühleres Zweitgas beigemischt, um ein kühleres Mischgas als das Abgas zu erhalten.

Wie oben beschrieben, dient dies insbesondere dazu, ein zu hohes Temperaturniveau des Abgases abzusenken. Außerdem ergibt sich durch Beimischung des Zweitgases eine erhöhte Menge an Mischgas im Vergleich zu Abgas, welches für die Erwärmung der Komponente zur Verfügung steht.

In einer bevorzugten Ausführungsform des Verfahrens wird davon ausgegangen, dass von der Brennstoffzelle im Betrieb Kathodenabluft erzeugt wird und zumindest ein Teil der Kathodenabluft der Brennstoffzelle dem Reformer zugeführt bzw. zu diesem rückgeführt wird. Der Reformer prozessiert die zugeführte Kathodenabluft der Brennstoffzelle zu einem Kathodenprozessgas und gibt dieses wieder aus. Zumindest ein zweiter Teil der Abwärme vom Reformer wird dabei in Form von erwärmtem Kathodenprozessgas erzeugt. Das erwärmte Kathodenprozessgas wird zusammen mit dem Abgas als Mischgas durch den Wärmekanal zu der Komponente geführt, um diese zu erwärmen. Das Kathodenprozessgas weist insbesondere eine Temperatur von 20 bis 60 °C auf und /oder ist insbesondere verglichen mit dem Abgas deutlich feuchter. Durch die Mischung mit dem Abgas wird im Mischgas eine reduzierte Feuchtigkeit erreicht, mit anderen Worten wird durch Beimischung des Abgases zum Kathodenprozessgas letzteres getrocknet.

In dieser Ausführungsform der Erfindung wird also vorgeschlagen, die Abwärme des Reformers in Form von Kathodenprozessgas (veränderte Kathodenabluft der Brennstoffzelle) zu nutzen und mit dem Abgas zu mischen. In dieser Ausführungsform wird die Kathodenabluft der Brennstoffzellen also an den Reformer zurückgeführt, im Reformer prozesstechnisch verwendet und verändert. Die Temperatur des Kathodenprozessgases kann in Abhängigkeit der gewählten Betriebsparameter des Reformers zwischen 20 und 60 °C liegen. Die Nutzung des Kathodenprozessgases bringt zum einen zusätzliche Wärme (zweiter Teil der Abwärme) für den Wärmekanal / die Komponente (das Enteisungssystem) und zum anderen kann durch das Mischungsverhältnis des Abgases und des Kathodenprozessgases (auch hier kann nur ein Teil dessen im Wärmekanal genutzt werden) die Temperatur im Mischgas in einen gewünschten Bereich gebracht werden, der passend zum Enteisungssystem, also dem Wärmekanal / den Anforderungen zum Enteisen der Komponente ist. Durch die Mischung von Abgas und Kathodenprozessgas wird auch ein Nachteil beseitigt, der sich durch die alleinige Nutzung von Kathodenabluft der Brennstoffzelle ergeben würde, dass nämlich die Kathodenabluft durch Abkühlung und Wiedererwärmung zunächst getrocknet werden muss bzw. zur Wassergewinnung abgekühlt wird. Das Kathodenprozessgas ist feuchte, sauerstoffabgereicherte Luft und damit auch ungiftig. Durch die Mischung mit dem im Verhältnis hierzu recht trockenen Abgas verringert sich auch die Gefahr von Kondenswasserbildung im Wärmekanal / an der Komponente usw. (Wärmekanal z.B. in Form von Rohrleitungen), also im Enteisungssystem. Das Mischgas aus Abgas und Kathodenprozessgas verlässt das Flugzeug insbesondere auch in diesem Fall entsprechend wie dies bei bekannten Anwendungen der Zapfluft der Fall ist, nämlich in die Flugzeugumgebung.

In einer bevorzugten Ausführungsform wird ein bestimmtes Mischungsverhältnis von Abgas einerseits und - je nach Ausführungsform bzw. falls vorhanden - Zweitgas und/oder Kathodenprozessgas andererseits im Mischgas gewählt. Wie oben erläutert, kann hierdurch eine bestimmte gewünschte Temperatur / Feuchtigkeit im Mischgas eingestellt bzw. erreicht werden. Das Mischgas kann hier also die drei bisher genannten Komponenten, Abgas, Zweitgas und Kathodenprozessgas, enthalten. Weitere Komponenten können im Mischgas enthalten sein, insbesondere wenn diese weitere Teile der Abwärme transportieren; hierfür gilt diese Ausführungsform dann entsprechend.

In einer bevorzugten Ausführungsform enthält der Reformer einen ausgangsseitigen Kühler. Dieser dient bzw. ist eingerichtet zum Kühlen des im Reformer erzeugten Reformats, enthaltend den Wasserstoff (als Anteil des Reformats). Zumindest ein dritter Teil der Abwärme wird vom Reformer dann in Form von erwärmtem Wasserstoff / Reformat erzeugt. Vermittels des Kühlers des Reformers wird der dritte Teil der Abwärme vom Wasserstoff / Reformat an den Wärmekanal zum Transport zur Komponente übergeben.

Gemäß dieser Ausführungsform wird der Anteil der Abwärme des Reformers benutzt, welcher bei der Kühlung des Reformats / Wasserstoffs entsteht. Hintergrund dieser Ausführungsform ist: Das Reformat kann bzw. muss - z.B. bevor es Brennstoffzellen vom Typ NTPEM (Hochtemperatur-Polymerelektrolytmembran-Brennstoffzelle) zugeführt wird - gekühlt werden. Diese Wärme, die typischerweise in einem Wärmetauscher anfällt, kann dem Wärmekanal / Komponente (Enteisungssystem) angeboten werden. Dabei kann ein Kühlmedium im Kreis laufen, dass die im Wärmetauscher vom Wasserstoff / Reformat aufgenommene Wärme im Wärmekanal / Enteisungssystem wieder abgibt.

In einer bevorzugten Variante dieser Ausführungsform enthält der Kühler also einen Wärmetauscher, der thermisch einerseits an den Strom des erzeugten Reformats, enthaltend den Wasserstoff, und andererseits an den Wärmekanal gekoppelt ist. Der dritte Teil der Abwärme wird vom Wasserstoff / Reformat an den Wärmetauscher (z.B. dessen zirkulierendes Kühlmedium) und von dort an den Wärmekanal, z.B. das diesen durchströmende Mischgas, übergeben. Der Kühler kann auch insgesamt ein Wärmetauscher sein. Sämtliche betreffenden Komponenten sind also thermisch wieder aneinandergekoppelt, um jeweils den dritten Teil der Abwärme bis zum Wärmekanal zu übergeben.

In einer bevorzugten Ausführungsform weist der Reformer einen Startbrenner für den restlichen Teil des bzw. den eigentlichen Reformer auf. Zumindest ein vierter Teil der Abwärme, die an den Wärmekanal zum Transport zur Komponente übergeben wird, wird dann vom Startbrenner erzeugt. Dieser Anteil der Abwärme stammt also nicht vom Reformer im engeren Sinne, sondern von dem ihm zugeordneten Startbrenner. Mit anderen Worten wird also neben der bisher betrachteten Abwärme des eigentlichen Reformers (der den Reformierungsprozess vom Brennstoff zum Reformat / Wasserstoff durchführt) eine weitere Abwärme des Startbrenners (der den restlichen Reformer wenigstens auf Betriebstemperatur bringt) zur Einleitung in den Wärmekanal / Erwärmung der Komponente genutzt. Bezüglich Kopplung an den Wärmekanal bzw. Übergabe des vierten Teils der Abwärme an diesen gelten sinngemäß die oben bereits getroffenen Aussagen. Insbesondere kann hier also die Einleitung von weiterem Gas / Addition zum Mischgas, Ankopplung über ggf. weiteren Wärmetauscher usw. erfolgen. Auch hier besteht also die Option, den vierten Teil der Abwärme des Startbrenners entweder gasförmig oder in anderer Form, zum Beispiel über einen Wärmetauscher, in den Wärmekanal einzubringen. Gemäß dieser Ausführungsform wird also der Startbrenner ebenfalls zur Wärmeerzeugung verwendet, um Wärme für das Enteisungssystem bereitzustellen. Auch hier kann die Einspeisung der Abwärme bzw. des vierten Teils an einer beliebigen Stelle des Wärmekanals erfolgen.

In einer bevorzugten Ausführungsform des Verfahrens wird wenigstens eine der Komponenten nicht nur zur (tatsächlichen) Enteisung mit der Abwärme versorgt. Wie oben bereits beschrieben, dient eine derartige Erwärmung insbesondere auch der Eisverhütung, d.h. der Verhinderung, dass überhaupt erst Eis an der Komponente entsteht. So kann die Abwärme an der Komponente zum Beispiel immer dann zugeführt werden, wenn nach Erfahrungswerten eine Vereisung drohen würde. Insbesondere kann jedoch auch eine permanente Eisverhütung etabliert werden, indem die Komponente dauerhaft mit Abwärme versorgt wird. "Dauerhaft" ist hierbei auf den jeweiligen Betrieb des Flugzeuges zu verstehen und bedeutet zum Beispiel: während der gesamten Startvorbereitung und des Fluges des Flugzeuges. In dieser Ausführungsform wird also vorgeschlagen, das Enteisungssystem dauerhaft mit der Abwärme zu versorgen / zu betreiben, um die permanente Enteisung durchzuführen. Das entspricht dem Betrieb zur Eisverhütung (Anti-Icing), also einer permanenten Eisverhütung. Eine aus der Praxis bekannte konventionelle Weise zum Betrieb des Enteisungssystems, wie sie oben beschrieben ist (also nur bei Bedarf), könnte man daher in diesem Sinne auch "optionale Enteisung" nennen.

In einer bevorzugten Ausführungsform wird bei inaktiver Brennstoffzelle der Reformer in einem Recyclingbetrieb betrieben, in dem er den von ihm erzeugten Wasserstoff intern selbst wieder verbraucht. Diese Ausführungsform beruht auf folgenden Überlegungen: Der Reformer (Wasserstofferzeugungssystem) liefert immer das Abfallprodukt Abwärme, sofern es Bedarf an elektrischer Leistung aus dem Brennstoffzellensystem gibt und dafür Wasserstoff erzeugt werden muss. Ohne weitere Maßnahmen könnte somit nicht garantiert werden, dass immer wenn benötigt, auch tatsächlich Abwärme mit dem Reformer erzeugt wird. Denn es ist nicht sichergestellt, dass elektrische Leistung von der Brennstoffzelle abgenommen bzw. benötigt wird, und somit Wasserstoff benötigt wird. Eine Abschaltung der Wasserstofferzeugung im Reformer aus diesem Grund würde daher auch dazu führen, dass keine Abwärme mehr für die Komponente zur Verfügung stehen würde. Die vorliegende Ausführungsform beruht nun auf der Idee, den Reformer in einer Recyclingbetriebsart zu betreiben. Hierbei wird nur vergleichsweise wenig Wasserstoff erzeugt und dieser nicht von der Brennstoffzelle, sondern intern wieder im Reformer verbraucht, zum Beispiel um den Reformer auf Betriebstemperatur zu halten. So kann dieser jederzeit wieder die Wasserstofferzeugung erhöhen um auch die Brennstoffzelle jederzeit wieder schnellstmöglich mit Wasserstoff zu versorgen, indem die Wasserstoffleistung des Reformers hochgefahren wird.

Diese Recycling-Betriebsart wird nun gemäß der Ausführungsform zur Sicherstellung der Enteisungsfunktion genutzt, auch falls keine elektrische Leistung von der Brennstoffzelle gebraucht wird, aber trotzdem - zum Beispiel aufgrund der Flugphase - die Enteisung / Eisverhütung sichergestellt werden muss. Hierzu wird in der Betriebsart Recycling mehr Wärme / Abwärme erzeugt, als das Wasserstofferzeugungssystem intern zum Beispiel für die Aufrechterhaltung seiner Betriebstemperatur bräuchte. Die überschüssige Wärme steht dann wieder als Abwärme bereit und wird wie oben erläutert in den Wärmekanal eingeleitet und zur Komponente gebracht.

In einer weiteren bevorzugten Ausführungsform enthält das Flugzeug eine Wärmesenke zur Abgabe von Abwärme in die Umgebung. Die Wärmesenke ist insbesondere Teil der Enteisungsvorrichtung. Zumindest ein Teil der Abwärme des Reformers wird dann über den Wärmekanal nicht zu der Komponente, sondern zu der Wärmesenke transportiert, um über diese in die Umgebung des Flugzeuges abgeführt zu werden. Dies geschieht insbesondere dauerhaft. Die Wärmesenke weist also auf bzw. bildet eine thermische Schnittstelle zur Umgebung des Flugzeuges. Insbesondere ist die Wärmesenke ein Teil am Flugzeug, welches keiner Enteisung bedarf. Diese Ausführungsform beruht auf der Idee, auch Teile, insbesondere Oberflächen des Flugzeuges zu beheizen, die nicht bzw. nie enteist werden müssen, zum Beispiel die gesamte Flügelfläche. Damit kann mehr Abwärme / Wärme an die Flugzeugumgebung abgegeben werden, als dies mit einem Enteisungssystem über die zumindest bei Bedarf zu enteisenden Komponenten bisher möglich war. Auf diese Art kann ein großes Problem des Betriebs von Brennstoffzellen (einschl. deren Reformern) in Flugzeugen gelöst werden, nämlich die Entsorgung von Abwärme - insbesondere auch der Brennstoffzellen selbst, also nicht nur des Wasserstoff-Erzeugungs-Systems. Wie oben dargelegt, fällt in den Brennstoffzellen einschl. Reformer ca. die Hälfte der Energie des Wasserstoffs als Wärme / Abwärme bei der Stromerzeugung an. Für diese Abwärme wird eine Lösung benötigt, insbesondere bei dem Thema "elektrisches Fliegen". Denn hier kann Wärmeleistung je nach Flugzeuggröße von einigen Kilowatt bis einigen Megawatt anfallen. Die Abführung an die Wärmesenke löst diese Problem. Alternativ oder zusätzlich kann in einer bevorzugten Ausführungsform die zu entsorgende Wärmeleistung also auch - insbesondere zumindest zum Teil - von der Brennstoffzelle an die Komponente abgeführt werden. Dies kann auch über Zwischenschaltung eines Wärmetauschers und/oder des Wärmekanals erfolgen.

Die Aufgabe der Erfindung wird auch gelöst durch ein Verfahren nach Anspruch 11 zum Umrüsten eines Flugzeuges. Dieses (Ausgangs-)Flugzeug enthält eine Enteisungsvorrichtung. Diese enthält einen Wärmekanal, der von einer Wärmequelle zu einer im Bedarfsfall zu enteisenden Komponente führt. Der Wärmekanal dient dazu, Wärme von der Wärmequelle zu der Komponente zu transportieren um diese mit der Wärme zu erwärmen und dadurch zumindest im Bedarfsfall zu enteisen oder einer Enteisung vorzubeugen, wie oben beschrieben. Bei dem Verfahren wird das Flugzeug gegebenenfalls mit einem Reformer und / oder einer Brennstoffzelle nachgerüstet, so dass schließlich beides vorhanden ist. Dies gilt, sofern derartige Komponenten nicht bereits in der entsprechenden Ausführung, Dimensionierung usw. im Flugzeug vorhanden sind. Ansonsten werden die bereits vorhandenen Komponenten genutzt.

Weiterhin wird der Wärmekanal dazu ertüchtigt, wenigstens zusätzlich zur Wärme oder insbesondere anstelle der Wärme, nunmehr Abwärme des Reformers zur Komponente zu transportieren. Das Flugzeug wird weiterhin dazu ertüchtigt, das erfindungsgemäße Verfahren im Flugzeug ausführen zu können bzw. auszuführen. Dies geschieht insbesondere durch Betreiben des Reformers bzw. von dessen Komponenten, Ansteuerung eines Mischers für das Mischgas usw. Insbesondere wird hierzu eine Kontrolleinrichtung errichtet bzw. dazu eingerichtet, z.B. durch Programmierung eines Digitalrechners o.ä. Das Umrüst-Verfahren und zumindest ein Teil dessen möglicher Ausführungsformen sowie die jeweilige Vorteile wurden sinngemäß bereits im Zusammenhang mit dem oben erläuterten Verfahren zum Enteisen wenigstens einer Komponente eines Flugzeuges erläutert.

Insbesondere wird das Flugzeug also auch dazu ertüchtigt, eine Eisverhütung, wie oben beschrieben und/oder eine Erwärmung der Wärmesenke auszuführen. In entsprechenden Ausführungsformen wird das Flugzeug also insbesondere mit einem entsprechenden Beimischungsmittel für ein Zweitgas / Kathodenprozessgas zum Abgas, einem Startbrenner, einem Wärmetauscher, einer Wärmesenke usw. nachgerüstet, wie sie oben beschrieben wurden.

Insbesondere wird in dem Verfahren die weiter unten erläuterte Enteisungsvorrichtung oder zumindest deren noch nicht vorhandene Komponenten im Flugzeug nachgerüstet.

Die Aufgabe der Erfindung wird auch gelöst durch eine Enteisungsvorrichtung nach Anspruch 12 für ein Flugzeug. Hierbei wird davon ausgegangen, dass das Flugzeug enthält: Den oben erläuterten Reformer, der dazu eingerichtet ist, im Betrieb in einem Reformierungsprozess Wasserstoff und dabei entstehende Abwärme zu erzeugen. Die oben genannte Brennstoffzelle, die dazu eingerichtet ist, im Betrieb mit dem im Reformer erzeugten Wasserstoff betrieben zu werden. Die im Bedarfsfall zu enteisende Komponente.

Die Enteisungsvorrichtung enthält den zumindest vom Reformer zur Komponente führenden oben genannten Wärmekanal. Dieser ist jeweils sowohl mit dem Reformer (auch dessen eventuellen Komponenten wie Kühler oder Startbrenner usw.) als auch mit der Komponente / Wärmesenke zur Übertragung der Abwärme (der oben beschriebenen Anteile) thermisch koppelbar bzw. in einem Montagezustand gekoppelt. Die Enteisungsvorrichtung ist zur Ausführung des oben erläuterten Verfahrens zum Enteisen wenigstens einer Komponente eines Flugzeuges eingerichtet.

Die Enteisungsvorrichtung und zumindest ein Teil deren möglicher Ausführungsformen sowie die jeweiligen Vorteile wurden sinngemäß bereits im Zusammenhang mit den erfindungsgemäßen Verfahren erläutert.

Insbesondere weist gemäß der oben genannten Ausführungsformen die Enteisungsvorrichtung bzw. das in diesem Sinne vorausgesetzte Flugzeug weitere oben genannte Komponenten auf, wie zum Beispiel Zuführungsmittel für das Zweitgas / Kathodenprozessgas zum Abgas, den Startbrenner, die Wärmesenke usw.

Der Wärmekanal ist ein zur Führung eines Gases eingerichteter Gaskanal. Der Transport der Abwärme durch den Wärmekanal erfolgt also vermittels Durchleitung des die Abwärme tragenden Gases (Abgas, Mischgas, usw.). Die entsprechende Ausführungsform wurde sinngemäß bereits oben erläutert.

Die Aufgabe der Erfindung wird auch gelöst durch ein Flugzeug gemäß Patentanspruch 13. Dieses enthält die erfindungsgemäße Enteisungsvorrichtung sowie den in diesem Zusammenhang genannten Reformer, die Brennstoffzelle und die Komponente. Optional weist das Flugzeug die weiteren oben genannten zusätzlichen Merkmale auf, wie zum Beispiel Gaskanal, Startbrenner, Mittel zur Zuführung des Zweitgases, usw.

Die Erfindung beruht auf folgenden Erkenntnissen, Beobachtungen bzw. Überlegungen und weist noch die nachfolgenden bevorzugten Ausführungsformen auf. Diese Ausführungsformen werden dabei teils vereinfachend auch "die Erfindung" genannt. Die Ausführungsformen können hierbei auch Teile oder Kombinationen der oben genannten Ausführungsformen enthalten oder diesen entsprechen und/oder gegebenenfalls auch bisher nicht erwähnte Ausführungsformen einschließen.

Die Erfindung beruht auf der Idee, eine Alternative für die Bereitstellung von Energie / Wärme für Enteisungssysteme von Flugzeugen vorzuschlagen. In Abhängigkeit von den Flugphasen müssen Vorrichtungen im Flugzeug vorhanden sein, die Eisbildung an Komponenten verhindern oder dort bereits gebildetes Eis beseitigen. Diese Vorrichtungen benötigen Energie zur Erwärmung der Komponenten.

Die Erfindung beruht auf der Erkenntnis, dass Wärme von den Schubtriebwerken in Form von Zapfluft für die Enteisung benutzt werden könnte. Die Erkenntnis besteht auch darin, dass bei Flugzeugen mit einem älteren Entwicklungsstand den Triebwerken oder der Hilfsgasturbine (APU, auxiliary power unit) heiße, komprimierte Luft (Zapfluft, engl. "bleed air") entnommen und über Rohrleitungen dem Enteisungssystem / den Komponenten zugeführt werden könnte / wurde. Die heiße Luft gelangt über kleine Öffnungen des Enteisungssystems an die Stellen / Komponenten im Flugzeug, zum Beispiel den Flügelvorderkanten, den Klappen, den Triebwerkseinlässen, die in bestimmten Flugphasen erwärmt werden müssen, um dort Eisbildung zu vermeiden oder Eis zu beseitigen. Nachdem die heiße Luft den Großteil der Wärme an der Komponente abgegeben hat, entweicht sie nach außen in die das Flugzeug umgebende Atmosphäre.

Die Erfindung beruht auf der Erkenntnis, dass die den Triebwerken entnommene Zapfluft einen Energieverlust für den eigentlichen Zweck des Triebwerks, nämlich den Vortrieb, bedeutet. Dieser Energieverlust verursacht einen höheren Verbrauch an Treibstoff (Kerosin) und die Enteisungssysteme werden deshalb nur in Flugphasen betätigt, in denen eine Notwendigkeit hierfür besteht. Eine wesentliche Eigenschaft der bisherigen Enteisungssysteme ist deren Zu- bzw. Abschaltmöglichkeit. Gemäß der Erfindung kann hierauf verzichtet werden.

Die Erfindung beruht auch auf der Erkenntnis, dass elektrische Energie zum Enteisen verwendet werden könnte, nämlich um aus dieser Wärme zu erzeugen. Elektrische Energie könnte bevorzugt da eingesetzt werden, wo es um kleine Heizleistungen geht oder wo die Zuführung der Energie mittels Kabel einfacher zu bewerkstelligen ist als mit einem warmen Medium, das über Rohrleitungen geführt werden muss. Ein Aufwand für Zapflufterzeugung und -verteilung wäre somit vermieden. Dieser Ansatz wird jedoch gemäß der Erfindung nicht benötigt.

Die Erfindung beruht auch auf der Erkenntnis, dass sich neuere Entwicklungen mit der Bereitstellung von Energie im Flugzeug mittels Brennstoffzellen befassen. Möglich ist die Nutzung von Verlustwärme / Abwärme der Brennstoffzellen zum Enteisen. Dieser Ansatz wird gemäß der Erfindung erweitert.

Die Erfindung beruht weiterhin auf der Idee, dass eine vorteilhafte Bereitstellung von Wasserstoff für Brennstoffzellen im Flugzeug anhand von Reformern erfolgen kann. Idee der Erfindung ist es, diesen Reformer als Wärmequelle für die Bereitstellung von Abwärme zu nutzen.

Gemäß der Erfindung ergibt sich insbesondere eine permanente Eisverhütung durch synergetische Nutzung von Wärmequellen in Form von Teilen / Abfallprodukten des Reformers. Ein Brennstoffzellensystem einer Brennstoffzelle in Kombination mit einem Reformer (auch "Komplettreformer") bietet die Möglichkeit, Abfallwärme zur Komponenten-Enteisung zu verwenden und insbesondere als präventive Maßnahme zur Eisvermeidung zu dienen. Beim Eintreten einer Vereisungssituation kann damit erheblich Energie gespart werden und damit der Kerosinverbrauch reduziert werden, da die benötigte Energie dann nicht vom Triebwerk / APU / der Brennstoffzelle / einer sonstigen elektrischen Quelle bezogen werden muss.

Weitere Merkmale, Wirkungen und Vorteile der Erfindung ergeben sich aus der nachfolgenden Beschreibung eines bevorzugten Ausführungsbeispiels der Erfindung sowie der beigefügten Figuren. Dabei zeigen, jeweils in einer schematischen Prinzipskizze:

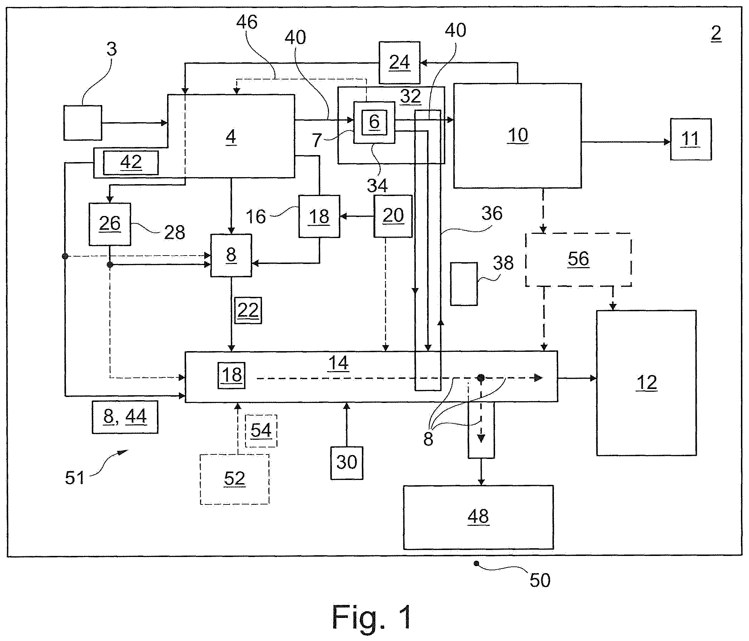

- Figur 1: ein Flugzeug mit einer Enteisungsvorrichtung in einem Prinzipbild.

Figur 1 zeigt - jeweils nur symbolisch angedeutet - ein Flugzeug 2. Dieses enthält einen Reformer 4. Beim Betrieb führt der Reformer 4 einen Reformierungsprozess durch. Bei diesem Reformierungsprozess erzeugt der Reformer 4 Wasserstoff 6 als Teil eines Reformats 7 aus einem Brennstoff 3, hier einem Propylenglykol-Wasser-Gemisch (PGW). Bei dem Reformierungsprozess entsteht auch Abwärme 8. Dies ist in Figur 1 generell symbolisch durch einen Pfeil dargestellt. Wie einzelne Anteile der Abwärme 8 genauer erzeugt werden, wird unten erläutert.

Das Flugzeug 2 enthält außerdem eine Brennstoffzelle 10, die im Betrieb mit dem vom Reformer 4 erzeugten Wasserstoff 6 betrieben wird. Im regulären Betrieb erzeugt die Brennstoffzelle 10 elektrische Energie 11. Somit stellt sich ein Strom 40 (dargestellt durch Pfeile) von Wasserstoff 6 / Reformat 7 vom Reformer 4 zur Brennstoffzelle 10 ein.

Das Flugzeug 2 enthält eine Komponente 12, im Beispiel eine Flügelvorderkante der Tragfläche. Im Bedarfsfall, d.h. in bestimmten Flugphasen und bei bestimmten Witterungsbedingungen, ist die Komponente 12 zu enteisen. Das Flugzeug 2 enthält einen Wärmekanal 14. Zum Zweck dieser Enteisung wird die Abwärme 8 des Reformers 4 vermittels des Wärmekanals 14 zur Komponente 12 transportiert. Mithilfe der Abwärme 8 wird die Komponente 12 erwärmt und dadurch enteist.

Ein erster Teil 16 der Abwärme 8 wird vom Reformer 4 in Form von erwärmtem Abgas 18 des Reformierungsprozesses erzeugt. Das Abgas 18 und mit diesem der erste Teil 16 der Abwärme wird durch den Wärmekanal 14 zu der Komponente 12 geführt, um diese zu erwärmen. Dem Abgas 18 wird dabei nach dessen Erzeugung im bzw. dessen Ausleitung aus dem Reformer 4 ein Zweitgas 20, hier Umgebungsluft, beigemischt. Die Summe bzw. Mischung aus Abgas 18 und Zweitgas 20 ergibt ein Mischgas 22. Dieses Mischgas 22 wird in den Wärmekanal eingeleitet, um das Abgas 18 einzuleiten. Das Abgas 18 und der darin enthaltene erste Teil 16 der Abwärme 8 werden somit als Teil des Mischgases 22 durch den Wärmekanal 14 zur Komponente 12 transportiert, um diese zu erwärmen. Auch das Mischgas 22 wird also durch den Wärmekanal 14 transportiert bzw. geführt.

In einer alternativen, daher gestrichelt gezeigten Ausführungsform wird das Zweitgas 20 erst in einem stromabwärts der Einleitungsstelle des Abgases 18 dem Wärmekanals 14 zugeführt und dem Abgas 18 beigemischt. Das Mischgas 22 durchläuft dann nur noch einen an der Komponente 12 endenden, endseitigen Abschnitt des Wärmekanals 14.

Beim Betrieb der Brennstoffzelle 10 erzeugt diese Kathodenabluft 24. Die Kathodenabluft 24 wird dem Reformer 4 zugeführt bzw. zu diesem zurückgeführt. Der Reformer 4 prozessiert (in Figur 1 gestrichelt angedeutet) die Kathodenabluft 24 zu Kathodenprozessgas 26. Ein zweiter Teil 28 der Abwärme 8 wird vom Reformer 4 in Form von erwärmtem Kathodenprozessgas 26 erzeugt bzw. ausgegeben. Das erwärmte Kathodenprozessgas 26 wird zusammen mit dem Abgas 18 ebenfalls zum Mischgas 22 gemischt und das Mischgas 22 mit dem Abgas 18 und dem Kathodenprozessgas 26 durch den Wärmekanal 14 zu der Komponente 12 geführt, um diese zu erwärmen. Auch hier kann (vergleichbar zum Zweitgas 20) die Einspeisung von Kathodenprozessgas 26 erst in einem späteren Abschnitt des Wärmekanals 14 erfolgen, um erst dort das Mischgas 22 zu bilden (in Figur 1 nicht näher dargestellt). Alternativ kann auch Kathodenprozessgas 26 und/oder Zweitgas 20 stromaufwärts des Abgases 18 in den Wärmekanal 14 eingespeist werden (gestrichelt dargestellt).

Sowohl Abgas 18, als auch Zweitgas 20 als auch Kathodenprozessgas 26 besitzen jeweils unterschiedliche Temperaturniveaus. Durch ein bestimmtes wählbares Mischungsverhältnis 30 (in Figur 1 nur symbolisch angedeutet) der Mischungs-Anteile (Abgas 18, Zweitgas 20, Kathodenprozessgas 26) untereinander kann eine gewünschte Temperatur im Mischgas 22 eingestellt werden, die zwischen dem wärmsten und kältesten zugeführten Anteil liegt. Der Wärmekanal 14 ist also hier ein zur Führung von Gasen eingerichteter Gaskanal. Als Gase kommen, wie beschrieben, das Abgas 18, ein Zweitgas 20, Kathodenabluft 24 bzw. das Mischgas 22 usw. in Frage.

Der Reformer 4 enthält ausgangsseitig, also zur Brennstoffzelle 10 hin, einen Kühler 32 zum Kühlen des erzeugten Reformats 7 bzw. Wasserstoffes 6. Ein dritter Teil 34 der Abwärme 8 wird vom Reformer 4 in Form von erwärmtem Reformat 7 bzw. Wasserstoff 6 erzeugt. Der dritte Teil 34 der Abwärme 8 wird vermittels des Kühlers 32 des Reformers 4 vom Reformat 7 bzw. vom Wasserstoff 6 entzogen und an den Wärmekanal 14 übergeben, um vom Wärmekanal 14 zur Komponente 12 transportiert zu werden. Hier ist beispielsweise die Übergabe an den Wärmekanal 14 erst in dessen stromabwärts späterem bzw. weiterem Verlauf dargestellt. Alternativ und nicht dargestellt kann jedoch auch hier der dritte Teil 34 der Abwärme 8 bereits weiter stromaufwärts, z.B. zu Beginn des Wärmekanals 14 in diesen eingespeist werden, z.B. zusammen mit dem Abgas 18, dem Zweitgas 20, dem Kathodenprozessgas 26 usw.

Der Kühler 32 enthält zur Erfüllung dieser Aufgabe einen hier als Kreislauf dargestellten Wärmetauscher 36, der thermisch einerseits an den Strom 40 des erzeugten Reformats 7, enthaltend den Wasserstoff 6, und andererseits an den Wärmekanal 14 thermisch gekoppelt ist. Der dritte Teil der Abwärme 8 wird daher vom Reformat 7, enthaltend den Wasserstoff 6, an den Wärmetauscher 36 und vom Wärmetauscher 36 an den Wärmekanal 14 übergeben. Dies geschieht durch ein in Figur 1 symbolisch angedeutetes zirkulierendes flüssiges Wärmetauschermedium 38, also ein Fluid. Die Abwärme bzw. der dritte Teil 34 wird an den Wärmekanal 14 bzw. ein darin zur Komponente 12 strömendes Medium, hier das Abgas 18 bzw. Mischgas 22 usw. übergeben.

Der Reformer 4 enthält einen Startbrenner 42. Ein vierter Teil 44 der Abwärme 8 wird vom Startbrenner 42 erzeugt. Auch dieser vierte Teil 44 der Abwärme 8 wird in den Wärmekanal 14 eingespeist und so zur Komponente 12 transportiert, um diese zu erwärmen. Die Einspeisung kann dabei, wie sinngemäß oben bereits beschrieben, an verschiedenen Stellen des Wärmekanals 14 erfolgen (hier gestrichelt angedeutet). Auch kann hierbei die Einspeisung in Form von Gas erfolgen oder der Startbrenner, sinngemäß wie oben erläutert, über einen weiteren Wärmetauscher bzw. die Zirkulation eines Transport- / Kühlmediums an den Wärmekanal 14 gekoppelt sein. All dies ist in der Figur der Übersichtlichkeit halber nicht weiter dargestellt.

Im Beispiel wird die Komponente 12 permanent, d.h. während des gesamten Betriebes des Reformers 4, mit Abwärme 8 versorgt, nicht nur wenn eine Vereisungssituation besteht oder zu befürchten ist. Insofern ergibt sich vorliegend eine permanente Eisverhütung an der Komponente 12.

Figur 1 zeigt auch eine alternative Betriebsform des dargestellten Flugzeuges. In dem Flugzeug 2 wird dann keine elektrische Energie 11 von der Brennstoffzelle 10 benötigt. Diese ist daher abgeschaltet und verbraucht daher auch keinen Wasserstoff 6 aus dem Reformer 4. Die Brennstoffzelle 10 ist also inaktiv. Der Reformer 4 wird jedoch nicht abgeschaltet, sondern arbeitet in einem Recyclingbetrieb weiter. In diesem wird der erzeugte Wasserstoff 6 in den Reformer 4 zurückgespeist und dort verbraucht, um den Reformer 4 auf Betriebstemperatur zu halten. Der Recycling-Betrieb ist in Figur 1 gestrichelt angedeutet.

Auch dabei wird weiterhin überschüssige Abwärme 8 vom Reformer 4 erzeugt, die nicht zum Temperaturerhalt in diesem selbst verbraucht wird. Die Abwärme 8 steht daher weiterhin zur Erwärmung bzw. Enteisung der Komponente 12 zur Verfügung, wie oben beschrieben.

Neben der Komponente 12 weist das Flugzeug 2 eine weitere Wärmesenke 48 auf, hier in Form einer gesamten Tragfläche. Die Wärmesenke 48 dient zur Abgabe eventuell darin vorhandener Wärme an eine Umgebung 50 des Flugzeuges 2. Ein Teil der Abwärme 8 wird über den Wärmekanal 14 bzw. eine Abzweigung dessen zur Wärmesenke 48 transportiert. Die Leitung der Abwärme 8 vom Reformer 4 zur Wärmesenke 48 geschieht durch Abzweigung an einem beliebigen Punkt des Wärmekanals 14, alternativ auch durch einen zweiten Wärmekanal 14, der mit dem betreffenden Anteil der Abwärme 8 gespeist wird. Über die Wärmesenke 48 wird die Abwärme 8 bzw. deren entsprechender Anteil dann an die Umgebung 50 aus dem Flugzeug 2 heraus abgeführt. Somit kann überschüssige Abwärme 8, die in den Komponenten 12 und auch sonst im Flugzeug 2 nicht verbraucht werden kann, ebenfalls aus dem Flugzeug 2 abgeführt werden.

Optional kann auch Abwärme der Brennstoffzelle 10 selbst an die Wärmesenke 48 und/oder die Komponente 12 abgeführt werden, wie durch gestrichelte Pfeile in Fig. 1 angedeutet ist. Dies kann auch - wiederum zusätzlich optional - über Zwischenschaltung eines Wärmetauschers 56 (daher ebenfalls gestrichelt) und/oder des Wärmekanals 14 erfolgen.

Der Transport der Abwärme 8 im Wärmekanal 14 ist in Figur 1 nochmals durch gestrichelte Pfeile verdeutlicht.

Das vorliegende Flugzeug 2 ist durch Umrüsten eines bestehenden Flugzeuges 2 entstanden. Bereits das bestehende Flugzeug enthielt eine Enteisungsvorrichtung 51. Diese wiederum enthielt den Wärmekanal 14 sowie eine Wärmequelle 52 zur Einspeisung von Wärme 54 in den Wärmekanal 14. So konnte die Komponente 12 aus der Wärmequelle 52 mithilfe der Wärme 54 enteist werden.

Im Rahmen der Umrüstung des Flugzeuges 2 wurde dieses mit dem bisher nicht vorhandenen Reformer 4 und der Brennstoffzelle 10 nachgerüstet. Der Wärmekanal 14 als solcher wurde beibehalten und lediglich durch thermische Kopplung bzw. Anschluss an den Reformer dazu ertüchtigt, die Abwärme 8 des Reformers 4 aufzunehmen und anstelle der Wärme 54 an die Komponenten 12 zu leiten. Hierzu wurde der Wärmekanal 14 von der Wärmequelle 52 abgekoppelt und an den Reformer 4 angekoppelt und dabei nur unwesentlich verändert. Der Wärmekanal 14 als solcher in seinem Verlauf innerhalb des Flugzeuges 2 zu den Komponenten 12 hin wurde ansonsten unverändert übernommen bzw. belassen.

Die Wärmequelle 52 wurde aus dem Flugzeug 2 entfernt, was durch Strichelung dargestellt ist. Denn deren Wärme 54 wird nicht mehr benötigt und ist insofern durch die Abwärme 8 ersetzt. Das Flugzeug 2 wurde außerdem zur Ausführung des oben genannten Verfahrens ertüchtigt. Insbesondere ergänzt wurde die permanente Eisverhütung und die Abführung von Abwärme 8 auch über die Wärmesenke 48.

Der Wärmekanal 14 ist daher auch nunmehr Teil einer Enteisungsvorrichtung 51 für das bzw. des Flugzeuges 2.

Zusammenfassend enthält das Flugzeug 2 also die Enteisungsvorrichtung 51 sowie den Reformer 4, die Brennstoffzelle 10 und die Komponente 12.

### Bezugszeichenliste

- 2: Flugzeug
- 4: Reformer
- 6: Wasserstoff
- 7: Reformat
- 8: Abwärme
- 10: Brennstoffzelle
- 11: elektrische Energie
- 12: Komponente
- 14: Wärmekanal
- 16: erster Teil
- 18: Abgas
- 20: Zweitgas
- 22: Mischgas
- 24: Kathodenabluft
- 26: Kathodenprozessgas
- 28: zweiter Teil
- 30: Mischungsverhältnis
- 32: Kühler
- 34: dritter Teil
- 36: Wärmetauscher
- 38: Wärmetauschermedium
- 40: Strom
- 42: Startbrenner
- 44: vierter Teil
- 46: Recycling-Betrieb
- 48: Wärmesenke
- 50: Umgebung
- 51: Enteisungsvorrichtung
- 52: Wärmequelle
- 54: Wärme
- 56: Wärmetauscher

## Patentansprüche

1. Verfahren zum Enteisen wenigstens einer Komponente (12) eines Flugzeuges (2),
- wobei das Flugzeug (2) enthält:
- einen Reformer (4), der im Betrieb in einem Reformierungsprozess Reformat (7), enthaltend Wasserstoff (6), und dabei entstehende Abwärme (8) erzeugt,
- und eine Brennstoffzelle (10), die im Betrieb mit dem erzeugten Wasserstoff (6) betrieben wird,
bei dem:
- wenigstens im Bedarfsfall einer Enteisung der Komponente (12) die Abwärme (8) des Reformers (4) vermittels eines Wärmekanals (14) zur Komponente (12) transportiert wird, um diese mit der Abwärme (8) zu erwärmen und dadurch zu enteisen,
**dadurch gekennzeichnet, dass**
- zumindest ein erster Teil (16) der Abwärme (8) vom Reformer (4) in Form von erwärmtem Abgas (18) des Reformierungsprozesses erzeugt wird,
- das Abgas (18) durch den Wärmekanal (14) zu der Komponente (12) geführt wird, um diese zu erwärmen.

2. Verfahren nach Anspruch 1,
**dadurch gekennzeichnet, dass**
- dem Abgas (18) nach dessen Erzeugung im Reformer (4) ein Zweitgas (20) beigemischt wird, um ein Mischgas (22) zu erhalten,
- das Abgas (18) mit dem Mischgas (22) durch den Wärmekanal (14) zu der Komponente (12) geführt wird, um diese zu erwärmen.

3. Verfahren nach einem der vorhergehenden Ansprüche,
**dadurch gekennzeichnet, dass**
- von der Brennstoffzelle (10) Kathodenabluft (24) erzeugt wird,
- zumindest ein Teil der Kathodenabluft (24) dem Reformer (4) zugeführt wird,
- der Reformer (4) die Kathodenabluft (24) zu Kathodenprozessgas (26) prozessiert,
- zumindest ein zweiter Teil (28) der Abwärme (8) vom Reformer (4) in Form von erwärmtem Kathodenprozessgas (26) erzeugt wird,
- das erwärmte Kathodenprozessgas (26) zusammen mit dem Abgas (18) als Mischgas (22) durch den Wärmekanal (14) zu der Komponente (12) geführt wird, um diese zu erwärmen.

4. Verfahren nach einem der vorhergehenden Ansprüche,
**dadurch gekennzeichnet, dass**
ein bestimmtes Mischungsverhältnis (30) von Abgas (18) einerseits und - falls vorhanden - Zweitgas (20) und/oder Kathodenprozessgas (26) andererseits im Mischgas (22) gewählt wird.

5. Verfahren nach einem der vorhergehenden Ansprüche,
**dadurch gekennzeichnet, dass**
- der Reformer (4) einen ausgangsseitigen Kühler (32) zum Kühlen des erzeugten Reformats (7), enthaltend Wasserstoff (6), enthält,
- und zumindest ein dritter Teil (34) der Abwärme (8) vom Reformer (4) in Form von erwärmtem Reformat (7) mit Wasserstoff (6) erzeugt wird und der dritte Teil (34) der Abwärme (8) vermittels des Kühlers (32) vom Reformat (7) mit dem Wasserstoff (6) an den Wärmekanal (14) zum Transport zur Komponente (12) übergeben wird.

6. Verfahren nach Anspruch 5,
**dadurch gekennzeichnet, dass**
der Kühler (32) einen Wärmetauscher (36) enthält, der thermisch einerseits an den Strom (40) des erzeugten Reformats (7), enthaltend den Wasserstoff (6), und andererseits an den Wärmekanal (14) gekoppelt ist,
der dritte Teil (34) der Abwärme (8) an den Wärmetauscher (36) und von dort an den Wärmekanal (14) übergeben wird.

7. Verfahren nach einem der vorhergehenden Ansprüche,
**dadurch gekennzeichnet, dass**
der Reformer (4) einen Startbrenner (42) für den restlichen Reformer (4) enthält, und zumindest ein vierter Teil (44) der Abwärme (8) von dem Startbrenner (42) erzeugt wird.

8. Verfahren nach einem der vorhergehenden Ansprüche,
**dadurch gekennzeichnet, dass**
wenigstens eine der Komponenten (12) nicht nur zur Enteisung mit der Abwärme (8) versorgt wird.

9. Verfahren nach einem der vorhergehenden Ansprüche,
**dadurch gekennzeichnet, dass**
bei inaktiver Brennstoffzelle (10) der Reformer (4) in einem Recycling-Betrieb (46) betrieben wird, in dem er den von ihm erzeugten Wasserstoff (6) intern verbraucht.

10. Verfahren nach einem der vorhergehenden Ansprüche,
**dadurch gekennzeichnet, dass**
das Flugzeug (2) eine Wärmesenke (48) zur Abgabe von Abwärme (8) in die Umgebung (50) enthält, und zumindest ein Teil der Abwärme (8) über den Wärmekanal (14) zu der Wärmesenke (48) transportiert wird, um über diese in die Umgebung (50) abgeführt zu werden.

11. Verfahren zum Umrüsten eines Flugzeuges, wobei das Flugzeug eine Enteisungsvorrichtung enthält, die einen von einer Wärmequelle zu einer im Bedarfsfall zu enteisenden Komponente führenden Wärmekanal aufweist, um Wärme von der Wärmequelle zur Komponenten zu transportieren, um diese mit der Wärme zu erwärmen und dadurch zu enteisen,
bei dem:
- das Flugzeug gegebenenfalls mit einem Reformer und / oder einer Brennstoffzelle nachgerüstet wird,
- der Wärmekanal dazu ertüchtigt wird, wenigstens zusätzlich zur Wärme Abwärme des Reformers zur Komponente zu transportieren,
- und das Flugzeug dazu ertüchtigt wird, das Verfahren nach einem der Ansprüche 1 - 10 im Flugzeug auszuführen.

12. Enteisungsvorrichtung (51) für ein Flugzeug (2),
- wobei das Flugzeug (2) enthält:
- einen Reformer (4), der dazu eingerichtet ist, im Betrieb in einem Reformierungsprozess Wasserstoff (6) und dabei entstehende Abwärme (8) zu erzeugen,
- und eine Brennstoffzelle (10), die dazu eingerichtet ist, im Betrieb mit dem erzeugten Wasserstoff (6) betrieben zu werden,
- eine im Bedarfsfall zu enteisende Komponente (12),
- wobei die Enteisungsvorrichtung (51) einen zumindest vom Reformer (4) zur Komponente (12) führenden und mit dem Reformer (4) und der Komponente (12) zur Übertragung der Abwärme (8) thermisch koppelbaren Wärmekanal (14) enthält,
- wobei die Enteisungsvorrichtung (51) zur Ausführung des Verfahrens nach einem der Ansprüche 1-10 eingerichtet ist,
**dadurch gekennzeichnet, dass**
der Wärmekanal (14) ein zur Führung eines Gases eingerichteter Gaskanal ist.

13. Flugzeug (2), mit
- der Enteisungsvorrichtung (51) nach Anspruch 12,
- dem Reformer (4),
- der Brennstoffzelle (10),
- der Komponente (12).

## Claims

1. Method for de-icing at least one component (12) of an aircraft (2),
- the aircraft (2) comprising:
- a reformer (4) which produces reformate (7), containing hydrogen (6), and waste heat (8) arising in the process in a reforming process during operation,
- and a fuel cell (10) which is operated with the produced hydrogen (6) during operation,
in the case of which method:
- at least in the case of de-icing of the component (12) being required, the waste heat (8) of the reformer (4) is transported by means of a heat channel (14) to the component (12), in order to heat the latter by way of the waste heat (8) and, as a result, to de-ice it,
**characterized in that**
- at least a first part (16) of the waste heat (8) is produced by the reformer (4) in the form of heated exhaust gas (18) of the reforming process,
- the exhaust gas (18) is conducted through the heat channel (14) to the component (12), in order to heat the latter.

2. Method according to Claim 1,
**characterized in that**
- a second gas (20) is added to the exhaust gas (18) after it has been produced in the reformer (4), in order to obtain a mixed gas (22),
- the exhaust gas (18) is conducted with the mixed gas (22) through the heat channel (14) to the component (12), in order to heat the latter.

3. Method according to one of the preceding claims, **characterized in that**
- cathode exhaust air (24) is produced by the fuel cell (10),
- at least one part of the cathode exhaust air (24) is fed to the reformer (4),
- the reformer (4) processes the cathode exhaust air (24) to form cathode process gas (26),
- at least a second part (28) of the waste heat (8) is produced by the reformer (4) in the form of heated cathode process gas (26),
- the heated cathode process gas (26) is conducted together with the exhaust gas (18) as mixed gas (22) through the heat channel (14) to the component (12), in order to heat the latter.

4. Method according to one of the preceding claims, **characterized in that**
a defined mixing ratio (30) of exhaust gas (18) firstly and, if present, second gas (20) and/or cathode process gas (26) secondly is selected in the mixed gas (22).

5. Method according to one of the preceding claims, **characterized in that**
- the reformer (4) comprises an output-side cooler (32) for cooling the produced reformate (7), comprising hydrogen (6),
- and at least a third part (34) of the waste heat (8) is produced by the reformer (4) in the form of heated reformate (7) with hydrogen (6), and the third part (34) of the waste heat (8) is transferred by means of the cooler (32) from the reformate (7) with the hydrogen (6) to the heat channel (14) for transport to the component (12) .

6. Method according to Claim 5,
**characterized in that**
the cooler (32) comprises a heat exchanger (36) which is coupled thermally on one side to the flow (40) of the produced reformate (7), comprising the hydrogen (6), and on the other side to the heat channel (14), and
the third part (34) of the waste heat (8) is transferred to the heat exchanger (36) and from there to the heat channel (14).

7. Method according to one of the preceding claims, **characterized in that**
the reformer (4) comprises an ignition boiler (42) for the remaining reformer (4), and at least a fourth part (44) of the waste heat (8) is produced by the ignition boiler (42).

8. Method according to one of the preceding claims, **characterized in that**
at least one of the components (12) is supplied with the waste heat (8) not only for de-icing purposes.

9. Method according to one of the preceding claims, **characterized in that**
in the case of an inactive fuel cell (10), the reformer (4) is operated in a recycling mode (46), in which it internally consumes the hydrogen (6) which is produced by it.

10. Method according to one of the preceding claims, **characterized in that**
the aircraft (2) comprises a heat sink (48) for outputting waste heat (8) into the surroundings (50), and at least one part of the waste heat (8) is transported via the heat channel (14) to the heat sink (48), in order to be dissipated via the latter to the surroundings (50).

11. Method for retrofitting an aircraft, the aircraft comprising a de-icing apparatus which has a heat channel which leads from a heat source to a component which is to be de-iced as required, in order to transport heat from the heat source to the component, in order to heat the latter with the heat and, as a result, to de-ice it, in the case of which method:
- the aircraft is possibly retrofitted with a reformer and/or a fuel cell,
- the heat channel is upgraded, at least in addition to the heat, to transport waste heat of the reformer to the component,
- and the aircraft is upgraded to carry out the method according to one of Claims 1-10 in the aircraft.

12. De-icing apparatus (51) for an aircraft (2),
- the aircraft (2) comprising:
- a reformer (4) which is configured to produce hydrogen (6) and waste heat (8) arising in the process in a reforming process during operation,
- and a fuel cell (10) which is configured to be operated with the produced hydrogen (6) during operation,
- a component (12) which is to be de-iced as required,
- the de-icing apparatus (51) comprising a heat channel (14) which leads at least from the reformer (4) to the component (12) and can be thermally coupled to the reformer (4) and the component (12) for the transfer of the waste heat (8),
- the de-icing apparatus (51) being configured to carry out the method according to one of Claims 1-10,
**characterized in that**
the heat channel (14) is a gas channel which is configured to conduct a gas.

13. Aircraft (2), with
- the de-icing apparatus (51) according to Claim 12,
- the reformer (4),
- the fuel cell (10),
- the component (12).

## Revendications

1. Procédé de dégivrage d'au moins un élément (12) d'un aéronef (2),
- l'aéronef (2) contenant :
- un reformeur (4), qui produit, lors du fonctionnement dans un processus de reformage, un reformat (7), contenant de l'hydrogène (6), et de la chaleur résiduelle (8) se formant conjointement,
- et une pile à combustible (10), qui fonctionne lors du fonctionnement à l'aide de l'hydrogène (6) produit,
dans lequel :
- au moins en cas de nécessité d'un dégivrage de l'élément (12), la chaleur résiduelle (8) du reformeur (4) est transportée vers l'élément (12) au moyen d'un canal de chauffage (14) afin de chauffer ledit élément à l'aide de la chaleur résiduelle (8) et d'ainsi le dégivrer,
**caractérisé en ce que**
- au moins une première partie (16) de la chaleur résiduelle (8) est produite par le reformeur (4) sous la forme de gaz résiduaire (18) réchauffé du processus de reformage,
- le gaz résiduaire (18) est guidé à travers le canal de chauffage (14) vers l'élément (12) afin de réchauffer celui-ci.

2. Procédé selon la revendication 1,
**caractérisé en ce que**
- le gaz résiduaire (18) est mélangé après sa production dans le reformeur (4) avec un deuxième gaz (20) afin d'obtenir un gaz mixte (22),
- le gaz résiduaire (18) est guidé avec le gaz mixte (22) à travers le canal de chauffage (14) vers l'élément (12) afin de réchauffer celui-ci.

3. Procédé selon l'une des revendications précédentes, **caractérisé en ce que**
- de l'air résiduaire cathodique (24) est produit par la pile à combustible (10),
- au moins une partie de l'air résiduaire cathodique (24) est introduite dans le reformeur (4),
- le reformeur (4) traite l'air résiduaire cathodique (24) en gaz traité cathodique (26),
- au moins une deuxième partie (28) de la chaleur résiduelle (8) est produite par le reformeur (4) sous la forme de gaz traité cathodique (26) réchauffé,
- le gaz traité cathodique (26) réchauffé est guidé conjointement avec le gaz résiduaire (18) en tant que gaz mixte (22) à travers le canal de chauffage (14) vers l'élément (12) afin de réchauffer celui-ci.

4. Procédé selon l'une des revendications précédentes, **caractérisé en ce que**
un rapport de mélange (30) déterminé de gaz résiduaire (18) d'une part et - s'il est présent
- de deuxième gaz (20) et/ou de gaz traité cathodique (26) d'autre part est choisi dans le gaz mixte (22).

5. Procédé selon l'une des revendications précédentes, **caractérisé en ce que**
- le reformeur (4) contient un refroidisseur (32) côté sortie pour le refroidissement du reformat (7) produit, contenant de l'hydrogène (6),
- et au moins une troisième partie (34) de la chaleur résiduelle (8) du reformeur (4) est produite sous forme de reformat (7) réchauffé contenant de l'hydrogène (6) et la troisième partie (34) de la chaleur résiduelle (8) est transférée au moyen du refroidisseur (32) à partir du reformat (7) contenant l'hydrogène (6) au canal de chauffage (14) pour le transport vers l'élément (12).

6. Procédé selon la revendication 5,
**caractérisé en ce que**
le refroidisseur (32) contient un échangeur de chaleur (36) qui est couplé thermiquement d'une part au flux (40) du reformat (7) produit, contenant l'hydrogène (6), et d'autre part au canal de chauffage (14),
la troisième partie (34) de la chaleur résiduelle (8) étant transférée à l'échangeur de chaleur (36) et de là au canal de chauffage (14).

7. Procédé selon l'une des revendications précédentes, **caractérisé en ce que**
le reformeur (4) contient un brûleur de démarrage (42) pour le reste du reformeur (4) et au moins une quatrième partie (44) de la chaleur résiduelle (8) est produite par le brûleur de démarrage (42).

8. Procédé selon l'une des revendications précédentes, **caractérisé en ce que**
au moins l'un des éléments (12) n'est pas uniquement alimenté en chaleur résiduelle (8) pour le dégivrage.

9. Procédé selon l'une des revendications précédentes, **caractérisé en ce que**
lorsque la pile à combustible (10) est inactive, le reformeur (4) fonctionne dans un fonctionnement de recyclage (46) dans lequel il consomme en interne l'hydrogène (6) qu'il produit.

10. Procédé selon l'une des revendications précédentes, **caractérisé en ce que**
l'aéronef (2) contient un dissipateur de chaleur (48) destiné à distribuer de la chaleur résiduelle (8) dans l'environnement (50) et au moins une partie de la chaleur résiduelle (8) est transportée par l'intermédiaire du canal de chauffage (14) vers le dissipateur de chaleur (48) afin d'être distribuée par l'intermédiaire de celui-ci dans l'environnement (50).

11. Procédé de rééquipement d'un aéronef, l'aéronef contenant un dispositif de dégivrage qui présente un canal de chauffage allant à partir d'une source de chaleur vers un élément à dégivrer en cas de nécessité, pour le transport de chaleur à partir de la source de chaleur vers les éléments afin de réchauffer ceux-ci par la chaleur et d'ainsi les dégivrer,
dans lequel :
- l'aéronef est le cas échéant rééquipé d'un reformeur et/ou d'une pile à combustible,
- le canal de chauffage est aménagé pour le transport, au moins en plus de la chaleur, de chaleur résiduelle du reformeur vers l'élément,
- et l'aéronef est aménagé pour exécuter le procédé selon l'une des revendications 1 à 10 dans l'aéronef.

12. Dispositif de dégivrage (51) pour un aéronef (2),
- l'aéronef (2) contenant :
- un reformeur (4), conçu pour, lors du fonctionnement dans un processus de reformage, produire de l'hydrogène (6) et de la chaleur résiduelle (8) se formant conjointement,
- et une pile à combustible (10), qui est conçue pour, lors du fonctionnement, fonctionner avec l'hydrogène (6) produit,
- un élément (12) à dégivrer en cas de nécessité,
- le dispositif de dégivrage (51) contenant au moins un canal de chauffage (14) allant du reformeur (4) au composant (12) et pouvant être thermiquement couplé au reformeur (4) et à l'élément (12) pour le transfert de la chaleur résiduelle (8),
- le dispositif de dégivrage (51) étant conçu pour exécuter le procédé selon l'une des revendications 1 à 10,
**caractérisé en ce que**
le canal de chauffage (14) est un canal à gaz conçu pour guider un gaz.

13. Aéronef (2), présentant
- le dispositif de dégivrage (51) selon la revendication 12,
- le reformeur (4),
- la pile à combustible (10),
- l'élément (12).
